# EUROPÄISCHE PATENTANMELDUNG

(11) **EP 4 001 067 A1**
(43) Veröffentlichungstag der Anmeldung: **25.05.2022**
(21) Anmeldenummer: 21207489.2
(22) Anmeldetag: 10.11.2021
(51) Int. Cl.: B62D 29/00, B62D 21/20, B62D 63/08

(54) **BAUTEIL UND VERFAHREN ZU DESSEN HERSTELLUNG**

(30) Priorität: 17.11.2020 DE 102020130348
(71) Anmelder: Humbaur GmbH, 86368 Gersthofen (DE)
(72) Erfinder: Schmidt, Mircea, 86368 Gersthofen (DE)
(74) Vertreter: Meissner Bolte Partnerschaft mbB

(57) **Zusammenfassung**

Die Erfindung betrifft ein Bauteil mit mehreren Öffnungen (10) zur Verbindung des Bauteils mit Anbauteilen, wobei die Öffnungen (10) im Bauteil im Wesentlichen rechteckig ausgebildet sind, und wobei das Bauteil mit einer Korrosionsschutzschicht versehen ist, die sich durch die Öffnungen (10) hindurch erstreckt. Die Erfindung betrifft ferner einen Fahrzeugrahmen mit einem solchen Bauteil, einen Fahrzeuganhänger sowie ein Herstellungsverfahren.

## Beschreibung

Die Erfindung betrifft ein Bauteil, insbesondere einen Träger eines Fahrzeugrahmens für einen Anhänger, einen Fahrzeugrahmen für einen Anhänger mit einem solchen Bauteil, einen Fahrzeuganhänger sowie ein Herstellungsverfahren.

Träger von Fahrzeugrahmen haben die Aufgabe, insbesondere den Aufbau eines Anhängers zu stützen sowie das Fahrgestell des Anhängers aufzunehmen. Dazu wiesen Träger in der Praxis mehrere runde Öffnungen bzw. Bohrungen auf, um den Aufbau mit dem Träger zu verbinden. Weitere Öffnungen sind vorgesehen, um Anbauteile wie Fahrgestellelemente oder Kotflügel bzw. Unterlegkeile aufzunehmen.

Um die Träger vor Korrosion zu schützen, werden diese üblicherweise durch ein Tauchbeschichtungsverfahren mit einer Korrosionsschutzschicht versehen. Dabei hat sich in der Praxis gezeigt, dass bei dem Tauchbeschichtungsverfahren die Bohrungen oft von der Korrosionsschutzschicht überdeckt werden. Das führt dazu, dass ein weiterer Nachbearbeitungsschritt erforderlich ist, bei welchem die mit der Korrosionsschutzschicht verschlossenen Öffnungen nochmals aufgebohrt werden. Dieser zusätzliche Bearbeitungsschritt erhöht den zeitlichen und finanziellen Herstellungsaufwand. Außerdem wird durch das Aufbohren die Korrosionsschutzschicht beschädigt, so dass es in den aufgebohrten Öffnungen mittel- bzw. langfristig zu Korrosion kommen kann, was die Langlebigkeit des Trägers beeinträchtigt.

Überdies zeigt sich in der Praxis, dass nicht alle Öffnungen mit der Korrosionsschutzschicht verdeckt sind. Oft bleiben einige Öffnungen frei. Bei der Nachbearbeitung des Trägers nach dem Beschichten sind also diejenigen Bohrungen zu ermitteln, die von der Korrosionsschutzschicht verschlossen sind. Da dies besonders aufwändig ist, neigen die entsprechenden Arbeitskräfte dazu, grundsätzlich alle Öffnungen am Träger nochmals aufzubohren, so dass am Träger noch mehr Stellen entstehen, an welchen die Korrosionsschutzschicht beschädigt ist. Diese Nachteile ergeben sich nicht nur bei Trägern von Fahrzeugrahmen, sondern auch bei anderen Bauteilen, die Öffnungen und eine Korrosionsschutzschicht aufweisen.

Die Aufgabe der Erfindung besteht also darin, ein Bauteil, insbesondere einen Träger eines Fahrzeugrahmens für einen Anhänger anzugeben, das einen guten Korrosionsschutz aufweist und somit langlebig ist sowie einfach und kostengünstig hergestellt werden kann. Ferner ist es Aufgabe der Erfindung, einen Fahrzeugrahmen mit einem solchen Bauteil, einen Fahrzeuganhänger sowie ein vereinfachtes Herstellungsverfahren anzugeben.

Erfindungsgemäß wird diese Aufgabe im Hinblick auf das Bauteil durch den Gegenstand des Patentanspruchs 1, im Hinblick auf den Fahrzeugrahmen durch den Gegenstand des Patentanspruchs 11, im Hinblick auf den Fahrzeuganhänger durch den Gegenstand des Patentanspruchs 12 und im Hinblick auf das Herstellungsverfahren durch den Gegenstand des Patentanspruchs 13 gelöst.

So beruht die Erfindung auf dem Gedanken, ein Bauteil mit mehreren Öffnungen zur Verbindung des Bauteils mit Anbauteilen aufweist. Die Öffnungen im Bauteil sind im Wesentlichen rechteckig ausgebildet. Das Bauteil ist ferner mit einer Korrosionsschutzschicht versehen, die sich durch die Öffnungen hindurch erstreckt.

Entscheidend für die vorliegende Erfindung ist die Form der Öffnungen, die bei der Erfindung rechteckig ausgebildet ist. Es hat sich überraschend gezeigt, dass eine rechteckige Öffnungsform dazu führt, dass die Korrosionsschutzschicht die Öffnungen im Herstellungsprozess nicht verschließt. Eine Nachbearbeitung der Öffnungen ist somit nicht erforderlich, so dass auch eine Beschädigung der Korrosionsschutzschicht vermieden wird. Das so gestaltete Bauteil weist somit einen verbesserten Korrosionsschutz auf und ist folglich besonders langlebig. Außerdem ist die Herstellung deutlich vereinfacht und damit kostengünstig, da eine Nachbearbeitung des Bauteils nach der Beschichtung mit einem Korrosionsschutz nicht mehr erforderlich ist.

Bei einer besonders bevorzugten Ausführungsform der Erfindung ist das Bauteil ein Träger eines Fahrzeugrahmens für einen Anhänger. Das Bauteil, insbesondere der Träger, kann ein C-förmiges Querschnittsprofil und mehrere Öffnungen zur Verbindung des Bauteils, insbesondere des Trägers, mit einem Anhängeraufbau und/oder Anbauteilen aufweisen. Der Träger ist außerdem mit der Korrosionsschutzschicht versehen. Die Öffnungen im Träger sind im Wesentlichen rechteckig ausgebildet.

In diesem Zusammenhang ist darauf hinzuweisen, dass die Korrosionsschutzschicht, die sich erfindungsgemäß durch die Öffnungen erstreckt, die Öffnungen nicht verschließt. Vielmehr sind alle Randflächen der Öffnungen von der Korrosionsschutzschicht bedeckt, wodurch ein guter Korrosionsschutz auch innerhalb der frei zugänglichen Öffnungen erzielt wird.

Konkret ist es besonders bevorzugt, wenn die Öffnungen im Bauteil jeweils Öffnungsränder aufweisen, die vollständig von der Korrosionsschutzschicht bedeckt sind. Mit anderen Worten ist die Korrosionsschutzschicht auch innerhalb der Öffnungen nicht beschädigt, wie dies beim Stand der Technik durch das Aufbohren erfolgen kann. Vielmehr erstreckt sich die Korrosionsschutzschicht über alle Flächen des Bauteils, insbesondere auch die Innenflächen bzw. Öffnungsränder der Öffnungen. So kann auch Feuchtigkeit, die in die Öffnungen eintritt, nicht zu einer Korrosion führen, da die Korrosionsschutzschicht innerhalb der Öffnungen vollständig intakt ist.

Bei einer bevorzugten Ausführungsform der Erfindung weist das Bauteil einen seitlichen Steg auf, der einen oberen Schenkel und einen unteren Schenkel verbindet, wobei die Schenkel parallel zueinander ausgerichtet sind. Im Wesentlichen kann das Bauteil also ein C-förmiges Querschnittsprofil umfassen, was dem Bauteil eine entsprechend hohe Stabilität bei geringer Masse verleiht. Außerdem ist ein so gestaltetes Bauteil einfach durch Umbiegen von flachem Material, insbesondere Flachstahl, herstellbar.

Die Öffnungen in dem Bauteil können unterschiedlich positioniert sein und verschiedene Funktionen übernehmen. So kann insbesondere vorgesehen sein, dass zumindest einige der Öffnungen Seitenöffnungen bilden, die in dem seitlichen Steg des Bauteils ausgebildet sind. Die Seitenöffnungen können beispielsweise dazu dienen, Anbauteile, wie Kotflügel oder Halterungen für einen Unterlegkeil, aufzunehmen.

Ferner können einige der Öffnungen Kantenöffnungen bilden, die sich über eine Kante zwischen einem der Schenkel und dem Steg des Bauteils erstrecken. Es hat sich gezeigt, dass die Einbringung von Kantenöffnungen, die über die Kante zwischen einem Schenkel des Bauteils und dem Steg des Bauteils erstrecken, eine Materialstauung vermeiden. Üblicherweise werden die Öffnungen, insbesondere die Kantenöffnungen, vor dem Umbiegen des Flachmaterials zum C-förmigen Querschnittsprofil des Bauteils eingebracht. Indem die Umbiegung an Stellen erfolgt, in denen die Kantenöffnungen ausgebildet sind, werden zusätzliche Spannungen vermieden, was andernfalls zu einer Stauung des Materials im Bereich der Kante führt. Damit wird also der Umbiegeprozess vereinfacht und die Genauigkeit der Biegung erhöht. Die Kantenöffnungen können außerdem dazu dienen, Anbauteile, wie die Aufnahme einer Stützradhalterung oder Teile des Aufbaus eines Anhängers, mit dem Bauteil, insbesondere einem Träger eines Fahrzeugrahmens für einen Anhänger, zu verbinden.

Überdies können zumindest einige der Öffnungen Schenkelöffnungen bilden, die in wenigstens einem der Schenkel des Bauteils ausgebildet sind. Vorzugsweise sind an beiden Schenkeln des Bauteils Schenkelöffnungen ausgebildet. Die Schenkelöffnungen in gegenüberliegenden Schenkeln des Bauteils können deckungsgleich zueinander angeordnet sein. So können beispielsweise Schrauben oder Gewindestangen durch beide Schenkel des Bauteils geführt werden, um insbesondere einen Aufbau fest mit dem Bauteil zu verbinden. Generell kann vorgesehen sein, dass die Schenkelöffnungen hauptsächlich zur Befestigung des Aufbaus eines Anhängers auf dem Bauteil dienen. Die Schenkelöffnungen können jedoch auch genutzt werden, um weitere Anbauteile mit dem Bauteil zu verbinden.

Bevorzugt ist es, wenn die Seitenöffnungen im Wesentlichen quadratisch ausgebildet sind. Die quadratische Form der Seitenöffnungen kommt der ursprünglich bekannten runden Bohrungsform besonders nahe, vermeidet jedoch wegen der rechteckigen Grundform das Zusetzen der Seitenöffnungen mit der Korrosionsschutzschicht. Dennoch können über die quadratischen Seitenöffnungen besonders gut Schrauben oder Gewindestangen genutzt werden, um zusätzliche Anbauteile mit dem Bauteil zu verbinden. Die quadratische Form verhindert dabei ein Verschieben der Befestigungselemente entlang des Bauteils. Nicht-quadratische, rechteckige Öffnungen lassen eine solche Verschiebung, ähnlich wie Langlöcher, zu. Dies kann bisweilen erwünscht sein, in einer bevorzugten Variante soll gerade diese Verschiebung jedoch vermieden werden, so dass in der bevorzugten Ausführungsform vorgesehen ist, dass die Seitenöffnungen quadratisch ausgebildet sind.

Die Öffnungen, insbesondere die Seitenöffnungen, die Kantenöffnungen und/oder die Schenkelöffnungen, können abgerundete Ecken aufweisen. Die abgerundeten Ecken bewirken insbesondere, dass das Material des Bauteils an diesen Stellen nicht zu sehr geschwächt wird. Insofern erhöhen die abgerundeten Ecken die Stabilität des Bauteils. Gleichzeitig stellen abgerundete Ecken sicher, dass die Korrosionsschutzschicht auch über die Innenflächen bzw. Öffnungsränder der Öffnungen in gleichmäßiger Schichtdicke entsteht. Bei nichtabgerundeten Ecken besteht vielmehr die Gefahr, dass hier die Korrosionsschutzschicht nicht ausreichend in die Ecken eindringt und so der Korrosionsschutz nicht vollständig gewährleistet wird.

Bevorzugt ist es, wenn die Korrosionsschutzschicht eine Feuerverzinkung ist. Die Feuerverzinkung bietet einen besonders guten Korrosionsschutz und lässt sich einfach und schnell aufbringen.

Ein nebengeordneter Aspekt der Erfindung betrifft einen Fahrzeugrahmen für einen Anhänger mit einem zuvor beschriebenen Bauteil. Erfindungsgemäß ist das Bauteil als Längsträger ausgebildet, wobei die Öffnungen des Längsträgers mit Querträgern und/oder Anbauteilen, insbesondere einem Kotflügel und/oder einen Zurrbügel und/oder einer Halterung für einen Unterlegkeil und/oder einer Anhängerkupplung und/oder einem Stützrad, verbunden sind.

Konkret kann das Bauteil mehrere Öffnungen aufweisen, wobei einige der Öffnungen als Seitenöffnungen, einige weitere Öffnungen als Kantenöffnungen und einige weitere Öffnungen als Schenkelöffnungen ausgebildet sind. Unterschiedliche Öffnungen können dabei mit einem Kotflügel verbunden sein und/oder einen Zurrbügel aufnehmen und/oder eine Halterung für einen Unterlegkeil fixieren. Ferner kann eine Anhängerkupplung mit weiteren Öffnungen des Längsträgers verbunden sein. Auch die Halterung für ein Stützrad bzw. das Stützrad selbst kann mittels einiger Öffnungen am Längsträger angebracht sein.

Der Längsträger dient vorzugsweise als hauptsächlich tragendes Bauelement des Anhängers und weist insofern eine besondere Stabilitätsfunktion auf. Der Längsträger kann ferner mit Querträgern verbunden sein, die ebenfalls eine tragende Funktion bezüglich des Aufbaus aufweisen können. Ferner können die Querträger dazu dienen, zwei oder mehrere Längsträger miteinander zu verbinden. Mehrere Längsträger und Querträger können gemeinsam einen Gitterrahmen eines Anhängers bilden.

Bevorzugt ist es außerdem, wenn der Längsträger zumindest abschnittsweise eine Deichsel bildet. Vorzugsweise weist der Fahrzeugrahmen zwei Längsträger auf, die gemeinsam über den Aufbau des Anhängers vorstehen und V-förmig zusammengeführt sind. Der V-förmige Abschnitt des Fahrzeugrahmens bildet die Deichsel, die jeweils durch den Längsträger, insbesondere einen Abschnitt des Längsträgers, gebildet ist.

Im Rahmen der vorliegenden Anmeldung wird ferner ein Fahrzeuganhänger, insbesondere für motorisierte, mehrspurige Kraftfahrzeuge, mit einem zuvor beschriebenen Bauteil und/oder einem zuvor beschriebenen Fahrzeugrahmen offenbart und beansprucht.

Ein weiterer Aspekt der Erfindung betrifft ein Verfahren zur Herstellung eines Bauteils, insbesondere eines Trägers für einen Fahrzeugrahmen eines Anhängers, wobei folgende Schritte in der angegebenen Reihenfolge ausgeführt werden:
a) Bereitstellen eines Blechs, insbesondere eines Flachstahls,
b) Einbringen von im Wesentlichen rechteckigen Öffnungen in das Blech und
c) Beschichten des Blechs mit einer Korrosionsschutzschicht.

Der wesentliche Vorteil des Herstellungsverfahrens liegt darin, dass durch das Einbringen von rechteckigen Öffnungen in das Blech ein Zusetzen der Öffnungen mit der Korrosionsschutzschicht vermieden wird. Insofern kann auf die Nachbearbeitung der Öffnungen verzichtet werden, was das Herstellungsverfahren besonders effizient und kostengünstig macht.

Nach dem Einbringen der im Wesentlichen rechteckigen Öffnungen und vor dem Beschichten mit der Korrosionsschutzschicht kann das Blech zu einem C-Profil umgebogen werden.

Bevorzugt erfolgt das Beschichten des Blechs, insbesondere des C-Profils, durch Feuerverzinken. Das Feuerverzinken ist ein besonders kostengünstiger und effizienter Prozess zur Aufbringung einer Korrosionsschutzschicht auf einen Bauteil. Dabei wird das Blech bzw. das Bauteil in ein erhitztes Zinkbad getaucht. Das Zink umschließt alle Oberflächen des Bauteils bzw. Blechs, insbesondere auch die Öffnungsränder bzw. Innenflächen der Öffnungen. Wegen der Oberflächenspannung können sich dabei grundsätzlich auch Öffnungen zusetzen, was jedoch bei der Erfindung durch das Einbringen von rechteckigen Öffnungen in das Blech vermieden wird. Es hat sich überraschend gezeigt, dass das Zink durch die rechteckigen Öffnungen hindurchtritt, da die Oberflächenspannung nicht ausreicht, um rechteckige Öffnungen zu verschließen.

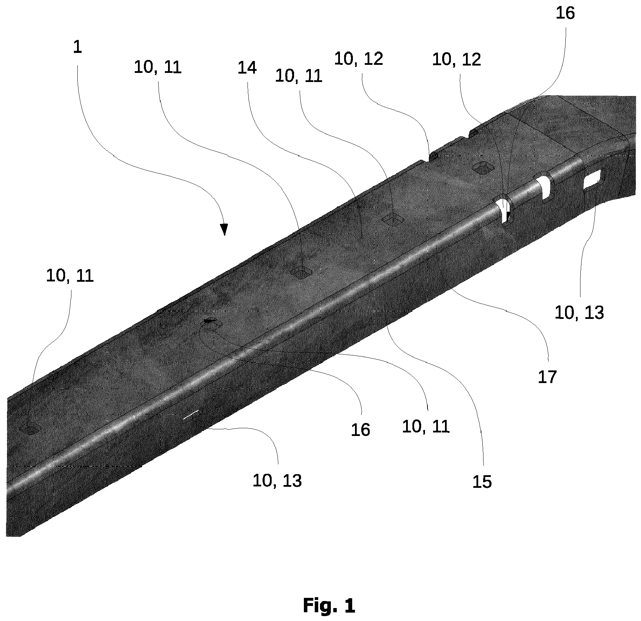

Die Erfindung wird im Folgenden anhand eines Ausführungsbeispiels unter Bezugnahme auf die beigefügte schematische Zeichnung näher erläutert. Darin zeigt die einzige Figur eine perspektivische Ansicht eines Teils eines Trägers eines Fahrzeugrahmens für einen Anhänger gemäß einem bevorzugten Ausführungsbeispiel.

In der Figur ist ein Ausschnitt eines Bauteils, insbesondere eines Trägers 1 , gezeigt, der aus einem umgebogenen Flachstahl gebildet ist. Der Träger 1 weist insgesamt ein C-förmiges Querschnittsprofil mit einem oberen Schenkel, einem unteren Schenkel 15 und einem seitlichen Steg 14 auf. In der perspektivischen Ansicht der Figur ist der obere Schenkel durch den seitlichen Steg 14 weitgehend verdeckt.

Der Träger umfasst außerdem mehrere Öffnungen 10, die über den Träger 1 verteilt angeordnet sind. Die Öffnungen 10 lassen sich durch ihre Position unterscheiden. So sind Seitenöffnungen 11 vorgesehen, die im seitlichen Steg 14 ausgebildet sind. Die seitlichen Öffnungen 11 weisen eine quadratische Form auf. In dem unteren Schenkel 15 sind Schenkelöffnungen 13 ausgebildet, die im Wesentlichen eine rechteckige Form, insbesondere eine nicht-quadratische, rechteckige Form, aufweisen.

Der untere Schenkel 15 bildet mit dem seitlichen Steg 14 eine Kante 17. Die Kante 17 entspricht also dem Übergang zwischen dem seitlichen Steg 14 und dem unteren Schenkel 15. Über diese Kante erstrecken sich Kantenöffnungen 12. Die Kantenöffnungen 12 verlaufen also vom seitlichen Steg 14 über die Kante 17 in den unteren Schenkel 15. Ähnliche Kantenöffnungen sind zwischen dem oberen Schenkel und dem seitlichen Steg 14 ausgebildet. Die Kantenöffnungen 12 sind ebenfalls rechteckförmig und insbesondere nicht-quadratisch.

Vorzugsweise weisen alle Öffnungen am Träger 1 eine rechteckige und/oder quadratische Form auf. Damit ist erreicht, dass eine Korrosionsschutzschicht, die auf den Träger 1 aufgebracht ist, bei dem Beschichtungsprozess nicht die Öffnungen 10 überdeckt. Vielmehr bleiben die Öffnungen 10 frei. Das führt dazu, dass eine Nachbearbeitung durch Aufbohren der Öffnungen 10 nicht mehr erforderlich ist. Das Nachbearbeiten kann zudem zu einer Beschädigung der Korrosionsschutzschicht führen, die insoweit vermieden wird. Daher ist bei dem Träger 1 sichergestellt, dass auch Öffnungsränder 16 bzw. Innenflächen der Öffnungen 10 vollständig von der Korrosionsschutzschicht bedeckt sind.

Selbst nach Anbringen von Anbauteilen oder Anbauten an dem Träger mittels Verbindungen, die über die Öffnungen 10 erfolgen, kann Feuchtigkeit an die Öffnungsränder 16 gelangen. Da diese Öffnungsränder 16 nun vollständig von der Korrosionsschutzschicht bedeckt sind, wird eine Korrosion vermieden, so dass die Langlebigkeit des Trägers 1 erhöht ist.

In der Figur ist ebenfalls erkennbar, dass die Öffnungen 10 abgerundete Ecken aufweisen. So kann sich die Korrosionsschutzschicht beim Beschichtungsprozess vollständig über alle Öffnungsränder 16 bzw. Innenflächen der Öffnungen 10 erstrecken und damit eine sichere Korrosionsschutzschicht über alle Oberflächen des Trägers 1 gewährleisten.

Die Öffnungen 10 dienen zur Befestigung unterschiedlicher Bauteile an dem Träger 1. So sind die Seitenöffnungen 11 überwiegend dazu vorgesehen, Anbauteile an dem Träger 1 anzubringen. Derartige Anbauteile können Halterungen für Unterlegkeile, Seitenbegrenzungsleuchten, Kotflügel oder weitere Zusatzelemente sein. Die Kantenöffnungen 12 können insbesondere vorgesehen sein, um Zurrbügel oder Zurrringe, die in den Aufbau ragen, am Träger 1 zu fixieren. Die Kantenöffnungen 12 sind daher als rechteckige Langlochöffnungen ausgebildet, so dass die Zurrbügel in den Kantenöffnungen 12 verschiebbar gelagert werden können. Konkret können die Zurrbügel so bei Nichtbenutzung in den Fahrzeugrahmen abgesenkt werden.

Die Schenkelöffnungen 13 dienen bevorzugt dazu, einen Aufbau mit dem Träger 1 zu verbinden. Vorzugsweise sind in beiden Schenkeln 13 Schenkelöffnungen 13 vorgesehen, die deckungsgleich zueinander angeordnet sind. So können beispielsweise Schrauben oder Gewindestangen durch beide Schenkel hindurchgeführt und dann mit dem Aufbau verbunden werden. So entsteht eine besonders stabile Verbindung zwischen dem Träger 1 und dem Anhängeraufbau.

Der Träger 1 kommt vorzugsweise als Teil eines Fahrzeugrahmens zum Einsatz, wobei insbesondere Fahrzeugrahmen für Anhänger als bevorzugtes Einsatzgebiet vorgesehen sind. Konkret können Fahrzeuganhänger vorgesehen sein, deren hauptsächlich tragendes Element durch den Träger 1 gebildet ist. Der Träger 1 ist insoweit Bestandteil des Grundrahmens bzw. Fahrzeugrahmens eines Anhängers. Der Träger 1 trägt vorzugsweise nicht nur den Aufbau, sondern auch ein Fahrgestell des Anhängers. Anhänger bzw. Fahrzeuganhänger im Sinne dieser Anmeldung sind vorzugsweise zum Einsatz mit einem motorisierten, mehrspurigen Kraftfahrzeug, beispielsweise einem Auto, vorgesehen.

### Bezugszeichenliste

- 1: Träger
- 10: Öffnung
- 11: Seitenöffnung
- 12: Kantenöffnung
- 13: Schenkelöffnung
- 14: seitlicher Steg
- 15: unterer Schenkel
- 16: Öffnungsrand
- 17: Kante

## Patentansprüche

1. Bauteil mit mehreren Öffnungen (10) zur Verbindung des Bauteils mit Anbauteilen, wobei die Öffnungen (10) im Bauteil im Wesentlichen rechteckig ausgebildet sind, und wobei das Bauteil mit einer Korrosionsschutzschicht versehen ist, die sich durch die Öffnungen (10) hindurch erstreckt.

2. Bauteil nach Anspruch 1,
**dadurch gekennzeichnet, dass**
das Bauteil ein Träger (1) eines Fahrzeugrahmens für einen Anhänger ist, wobei der Träger (1) ein C-förmiges Querschnittsprofil und mehrere Öffnungen (10) zur Verbindung des Trägers (1) mit einem Anhängeraufbau und/oder Anbauteilen aufweist.

3. Bauteil nach Anspruch 1 oder 2,
**dadurch gekennzeichnet, dass**
die Öffnungen (10) jeweils Öffnungsränder (16) aufweisen, die vollständig von der Korrosionsschutzschicht bedeckt sind.

4. Bauteil nach einem der vorhergehenden Ansprüche,
**dadurch gekennzeichnet, dass**
das Bauteil, insbesondere der Träger (1), einen seitlichen Steg (14) aufweist, der einen oberen Schenkel und einen unteren Schenkel (15) verbindet, wobei die Schenkel (15) parallel zueinander ausgerichtet sind.

5. Bauteil nach Anspruch 4,
**dadurch gekennzeichnet, dass**
zumindest einige der Öffnungen (10) Seitenöffnungen (11) bilden, die in dem seitlichen Steg (14) des Bauteils, insbesondere des Trägers (1), ausgebildet sind.

6. Bauteil nach Anspruch 4 oder 5,
**dadurch gekennzeichnet, dass**
zumindest einige der Öffnungen (10) Kantenöffnungen (12) bilden, die sich über eine Kante (17) zwischen einem der Schenkel (15) und dem Steg (14) des Bauteils, insbesondere des Trägers (1) erstrecken und/oder zumindest einige der Öffnungen (10) Schenkelöffnungen (13) bilden, die in wenigstens einem der Schenkel (15) des Bauteils, insbesondere des Trägers (1), ausgebildet sind.

7. Bauteil nach Anspruch 5 oder 6,
**dadurch gekennzeichnet, dass**
die Seitenöffnungen (11) im Wesentlichen quadratisch ausgebildet sind.

8. Bauteil nach einem der vorhergehenden Ansprüche,
**dadurch gekennzeichnet, dass**
die Öffnungen (10), insbesondere die Seitenöffnungen (11), die Kantenöffnungen (12) und/oder die Schenkelöffnungen (13), abgerundete Ecken aufweisen.

9. Bauteil nach einem der vorhergehenden Ansprüche,
**dadurch gekennzeichnet, dass**
die Korrosionsschutzschicht eine Feuerverzinkung ist.

10. Fahrzeugrahmen für einen Anhänger mit einem Bauteil nach einem der vorhergehenden Ansprüche,
**dadurch gekennzeichnet, dass**
das Bauteil als Längsträger ausgebildet ist, wobei die Öffnungen (10) des Längsträgers mit Querträgern und/oder Anbauteilen, insbesondere einem Kotflügel und/oder einem Zurrbügel und/oder einer Halterung für einen Unterlegkeil und/oder einer Anhängerkupplung und/oder einem Stützrad, verbunden sind.

11. Fahrzeugrahmen nach Anspruch 10,
**dadurch gekennzeichnet, dass**
der Längsträger zumindest abschnittsweise eine Deichsel bildet.

12. Fahrzeuganhänger mit einem Bauteil nach einem der Ansprüche 1 bis 9 und/oder einem Fahrzeugrahmen nach Anspruch 10 oder 11.

13. Verfahren zur Herstellung eines Bauteils, insbesondere eines Trägers (1) für einen Fahrzeugrahmen eines Anhängers, wobei folgende Schritte in der angegebenen Reihenfolge ausgeführt werden:
a) Bereitstellen eines Blechs, insbesondere eines Flachstahls,
b) Einbringen von im Wesentlichen rechteckigen Öffnungen (10) in das Blech und
c) Beschichten des C-Profils mit einer Korrosionsschutzschicht.

14. Verfahren nach Anspruch 13, wobei das Blech nach dem Einbringen der im Wesentlichen rechteckigen Öffnungen und vor dem Beschichten mit der Korrosionsschutzschicht zu einem C-Profil umgebogen wird und/oder das Beschichten des C-Profils durch Feuerverzinken erfolgt.

15. Verfahren nach Anspruch 13 oder 14, wobei das Bauteil nach einem der Ansprüche 1 bis 9 ausgebildet ist.
